# EUROPEAN PATENT SPECIFICATION

(11) **EP 3 076 332 B1**
(45) Date of publication and mention of the grant of the patent: **24.06.2020**
(21) Application number: 16163031.4
(22) Date of filing: 30.03.2016
(51) Int. Cl.: G06K 7/12, G06K 19/14, G06K 19/10, G06K 19/08, G06K 19/06

(54) **METHOD TO CHECK THE AUTHENTICITY OF ARTICLES, EACH PROVIDED WITH AT LEAST ONE OPTICAL READING MARKING**
VERFAHREN ZUM PRÜFEN DER AUTHENTIZITÄT VON ARTIKELN, WELCHE MIT MINDESTENS EINEM KENNZEICHEN ZUM OPTISCHEN LESEN AUSGESTATTET SIND
PROCÉDÉ POUR VÉRIFIER L'AUTHENTICITÉ D'ARTICLES, CHACUN ÉTANT MUNI D'AU MOINS UN MARQUAGE DE LECTURE OPTIQUE

(30) Priority: 30.03.2015 IT BO20150155
(43) Date of publication of application: 05.10.2016
(73) Proprietor: Cabro S.p.A., 52100 Arezzo (IT)
(72) Inventor: GIANNINI, Giacomo, 52100 AREZZO (IT); GHINI, Giacomo, 52100 AREZZO (IT)
(74) Representative: Bergadano, Mirko

(56) References cited:
- EP-A2- 0 978 798
- CN-A- 104 104 759
- US-A- 5 502 304
- US-A- 5 592 561
- US-A1- 2010 012 728
- US-A1- 2014 339 807

## Description

The present invention concerns a method to check the authenticity of articles, each provided with at least one optical reading marking.

In particular, the present invention can be advantageously, but not exclusively, applied in the field of the retail sale of articles, for example items of clothing, to which the following description will explicitly refer without loss of generality.

Checking the brand authenticity of items of clothing is a very real problem during the retail sale of said clothing. Normally, this check is done by the retailer, who carries out the appropriate controls on the clothing distribution chain. The end customer who purchases the item of clothing can only check the garment label, on which a brand and/or a marking consisting of a barcode are printed in ink. A label of this kind can be easily reproduced, and therefore faked, and therefore the end customer is not able to check for certain the authenticity of the item of clothing.

United States Patent No. 5,502,304 discloses a lower layer bar code, which is written on an object with a normal ink, an upper layer bar code, which is written over the lower layer bar code with an ink that is invisible to the naked eye, and a detector that is able to read the upper and lower level bar codes.

United States Patent Application No. US 2010/0012728 A1 discloses a method of reading at least two bar codes with the aid of a reading system comprising first and second illuminants capable of emitting respectively first and second luminous radiations having different spectral characteristics and an optical detector, the system being arranged so as to allow the reading, with the aid of the detector, of a first bar code when illuminated by the first illuminant and of a second bar code when illuminated by the second illuminant. In the method, the first and second bar codes are disposed on two different substrates and the first bar code is read with the first illuminant and the second bar code with the second illuminant.

European Patent Application No. EP 0978798 A2 discloses a system which includes a data reader and media bearing fluorescent indicia, and a method which includes the steps of: pulsing a light emitting diode at a forward current level above continuous use operating limits to produce pulsed radiation within an absorption spectrum of the fluorescent material and at a flux density sufficient to induce a fluorescent emission from the indicia; illuminating the indicia with the pulsed radiation to produce the fluorescent emission; and imaging the indicia on a radiation image sensor sensitive to radiation within an emission spectrum of the fluorescence.

United States Patent No. 5,592,561 discloses a system and method of marking goods for authentication and tracking purposes is described. The system and method include a central control which enables the system. The method and system are accomplished in real time, affording manufacturers the ability to eliminate problems associated with counterfeiting and diversion which begin at the manufacturing site. A central control unit enables the system by providing an allotment of goods to a host unit. The host unit directs printing terminals to mark particular goods with specific information encoding symbols. Following marking, goods are scanned to insure proper marking and then packaged for shipment. Following marking, the goods can be checked by illuminating the symbols printed thereon and cross referencing this data with the host database by using a field reading unit.

United States Patent Application No. US 2014/0339807 A1 discloses a method of authenticating a document. The method includes: providing a document having a substrate comprising an optical brightener; printing a background with a ultraviolet (UV) absorbing material on the substrate comprising a first pattern of lines having a first frequency and a first orientation; printing a security mark with the UV material on the substrate comprising a second pattern of lines having a second frequency or a second orientation or both; placing a lenticular lens over the security mark and background; illuminating the security mark and background through the lenticular lens with UV light; orienting the lenticular lens to match either the first orientation or the second orientation; and authenticating the document if the security mark matches a predetermined security mark.

Chinese Patent Application No. CN 104104759 A discloses a mobile phone provided with a lighting flashlight and a banknote checking spotlight. A lighting flashlight spotlight and a banknote checking ultraviolet spotlight are arranged at the lower side of the mobile phone body. The body is provided with corresponding key switches. When the mobile phone is carried, the flashlight can be used for facilitating lighting at night, authenticity of banknotes can be checked at any time, and the use of the mobile phone is more flexible and convenient.

The object of the present invention is to provide a method for checking the authenticity of articles provided with labels, which is without the drawbacks described above and, at the same time, is easy and inexpensive to produce.

According to the present invention, a method is provided for checking the authenticity of articles provided, each, with at least one optical reading marking, as defined in the attached claims.

The present invention will now be described with reference to the accompanying drawings, which illustrate a non-limiting embodiment example in which:
- figures 1 and 2 illustrate a front and rear view, respectively, of a common mobile electronic device used in the method of the present invention;
- figure 3 illustrates a label of an article, the authenticity of which is to be checked;
- figure 4 illustrates a system implementing the method of the invention;
- figures 5 and 6 illustrate two flow charts describing the operation of software means installed in the system of figure 4 and designed to implement the method of the invention; and
- figure 7 illustrates a variation of the label of figure 3.

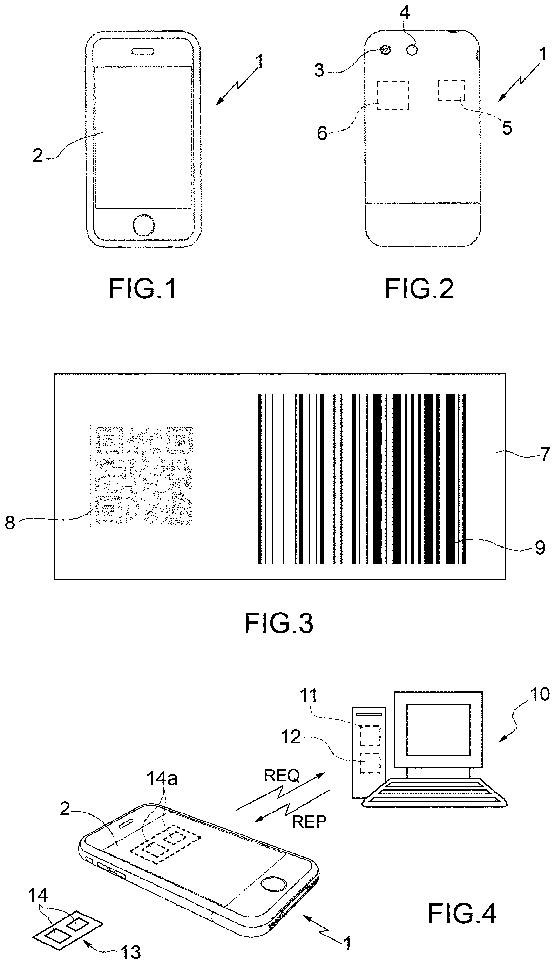

In figures 1 and 2, the number 1 generically indicates, as a whole, a common smartphone as an example of a mobile electronic device used for carrying out the method of the present invention. The smartphone 1 comprises, on the front side (figure 1), a touchscreen 2 which acts as a display and device for entering data and commands, and, on the rear side (figure 2), a camera 3 to capture images in the form of photos or film sequences, and a LED flash 4 for illuminating the object framed by the camera 3. The smartphone 1 comprises memory means 5 consisting of one or more memory modules for storing data and installations of various software programs (operating system and applications), and processing means 6 configured to check the operation of the entire smartphone 1 by means of the software programs installed.

According to a first not-limiting embodiment of the present invention, with particular reference to figure 3, each authentic article (not illustrated) is provided with a respective label 7 comprising a first marking 8 and a second marking 9, both by optical reading.

The marking 8 belongs to a first type of optical reading marking, contains or is associated with a respective first reference information content, and in particular information relative to the authentic origin of the article; said marking is printed by means of an ink comprising a fluorescent pigment, which is able to excite when illuminated, from a given distance D and for a given period of time T, by the flash 4, and to emit, when excited, light which has a negligible intensity compared to the light emitted by the flash 4, but superior to the normal ambient light, and maintain the excitation state for a given period of time TE after having switched off the flash 4; the marking 8 is therefore substantially invisible when illuminated by the flash 4, but visible for the time period TE after having switched off the flash 4. The distance D is less than or equal to 20 cm. The time period T is greater than or equal to 1 s. The time period TE depends on the decay of the fluorescence of the fluorescent pigment and is at least 5 s.

Below, the type of marking 8 is indicated by TY8 and the respective reference information content is indicated by INF8ref. In the example of figure 3, the marking 8 is a QR code and the reference information content INF8ref consists of the alphanumeric characters coded according to a QR code standard. The marking 8 is illustrated in figure 3 in a light grey shade to indicate that it is substantially invisible to the normal ambient light when the excitation of the fluorescent pigment caused by an intense light, such as that of the flash 4, has been exhausted. However, as is known, the excitation of a fluorescent pigment caused by an intense light is exhausted after a given non-negligible time from the disappearance of the intense light.

The marking 9 belongs to a second type of optical reading marking, contains or is associated with a second reference information content, and in particular information relative to a particular model of the article, and is printed by means of an ink normally visible when illuminated by the flash 4. Below, the type of marking 9 is indicated by TY9 and the respective reference information content is indicated by INF9ref. In the example of figure 3, the marking 9 is a barcode and the reference information content INF9ref consists of alphanumeric characters coded according to a barcode standard.

With reference to figure 4, the reference information contents INF8ref and INF9ref of the markings 8 and 9 are stored in the memory means 11 of a remote server 10.

In the memory means 5 of the smartphone 1, a particular client type software application is installed, below simply called APPC application, which is designed to implement, when run on the processing means 6, part of the method of the invention. The type of marking TY8 and TY9 of the markings 8 and 9 is also stored in the memory means 5. In particular, the type of marking of the markings 8 and 9 forms an integral part of the APPC application, or can be independently downloaded from the server 10, via the internet which is accessible by means of the radio access interface of the smartphone 1.

The APPC application interacts with a server type software application, below simply called APPS application, which is installed in the memory means 11 of the server 10 and is designed to implement, when run on the processing means 12 of said server 10, the remaining part of the method of the invention.

Again with reference to figure 4, when a user wishes to check the authenticity of a given article comprising a label, indicated by 13, provided with optical reading markings 14, he/she launches the APPC application, which preliminarily activates the camera 3, and positions the smartphone 1 in front of the label 13, with the flash 4 at the distance D from said label 13, so as to frame the markings in the screen 2, indicated by 14a.

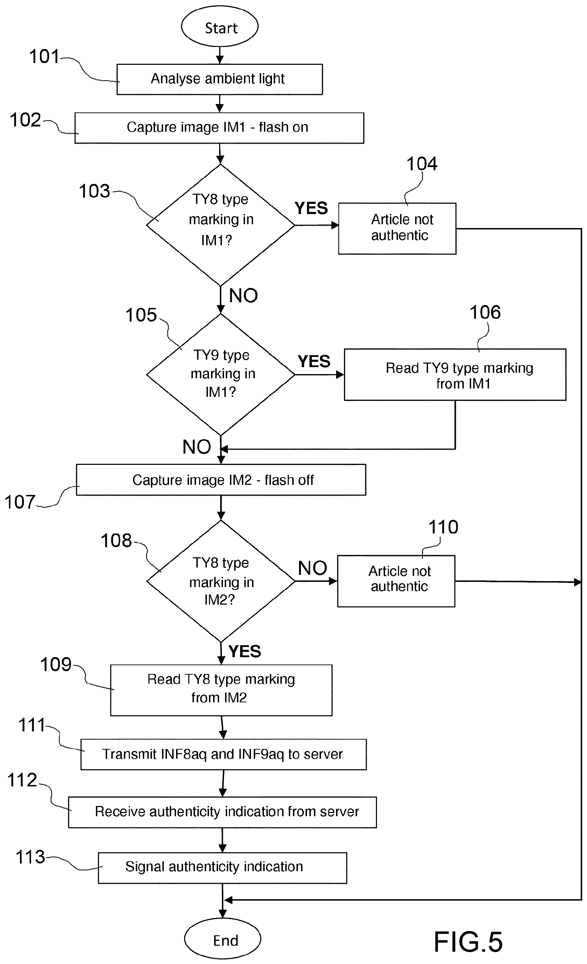

The APPC application performs the steps described below with reference to the flow chart of figure 5.

The ambient light is initially analysed via signals provided by the camera 3 and/or by any ambient light sensors present on board the smartphone 1 (block 101). The result of the above-mentioned analysis will be used in the subsequent processing steps of images captured with the camera 3, described below.

After the analysis of the ambient light, the flash 4 is switched on for the time period T and, when on, at least one first image IM1 of the markings 14 (block 102) is captured. The image IM1 is processed to check whether a type TY8 marking is visible in it, i.e. if a QR code is visible (block 103), and if so (output SI of block 103) the article of the label 13 is signalled as not authentic (block 104). In fact, if a QR code is visible in the light of the flash 4 it means that it has been printed with an ink visible in said light whereas, on the contrary, the marking 8 of an authentic article is substantially not visible in the light of the flash 4 due to the fluorescent pigment of the ink.

If no TY8 type marking is visible in the image IM1 (output NO of block 103), then the image IM1 is processed to check whether a type TY9 marking is visible in it, i.e. if a barcode (block 205) is visible, and if so the type TY9 marking is read to acquire a respective information content INF9aq (block 106) .

Regardless of whether a TY9 type marking is found or not, the flash 4 is switched off and a second image IM2 of the markings 14 is captured immediately after having switched off the flash 4 (block 107), i.e. within the time period TE from switch-off of the flash. The image IM2 is processed to check whether a type TY8 marking is visible in it, i.e. if a QR code is visible (block 108): if so (output SI of block 108) the type TY8 marking is read to acquire a respective information content INF8aq (block 109) and if not (output NO of the block 109) the article of the label 13 is signalled as not authentic (block 110).

The information content INF8aq and, if obtained, the information content INF9aq are transmitted to the server 10 (block 111). In particular, the information content acquired is incorporated in a request message REQ which is transmitted through the radio access interface (figure 4) and which also comprises a command to "wake up" the APPS application installed on the server 10.

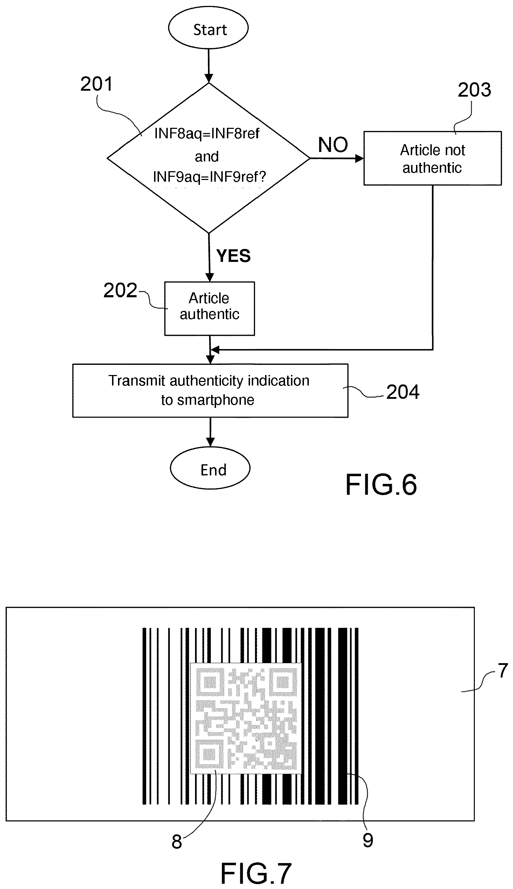

The APPS application processes the acquired information contents INF8aq and INF9aq with the reference information contents INF8ref and INF9ref in order to determine the authenticity or lack thereof of the article of the label 13, and in particular performs the steps described below with reference to the flow chart of figure 6.

Each acquired information content INF8aq, INF9aq is compared with the reference information content INF8ref, INF9ref of the same type of marking TY8, TY9 to check whether both the acquired contents INF8aq and INF9aq coincide with the relative reference contents INF8ref and INf9ref (block 201): if they coincide (output YES of block 201), then the article of the label 13 is indicated as authentic (block 202) otherwise it is indicated as not authentic (block 203). The indication of authenticity, i.e. the positive or negative result of the above-mentioned dual comparison, is contained in a reply message REP (figure 4) transmitted immediately to the smartphone 1 via the radio access interface (block 204). With reference again to figure 5, the APPC application receives the indication of authenticity transmitted by the server 10 (block 112) and signals said indication in an appropriate manner to the user (block 113).

Each of the steps for signalling the authenticity, or lack thereof, of the article (blocks 104, 110, 113) can be implemented in various alternative or overlapping ways, for example by displaying on the screen 2 a specific message which motivates the non-authenticity signalling of the article or by generating an appropriate audio signal.

According to a variation of the invention not illustrated, the method performs the steps subsequent to initial analysis of the ambient light (block 101) only if the ambient light detected is judged sufficient on the basis of known criteria.

According to a further embodiment of the present invention illustrated in figure 7, in which the corresponding elements are indicated by the same numbers and abbreviations as figure 3, the marking 8 overlaps the marking 9 so that the marking 9 (barcode) is visible around the marking 8.

According to a variation of the invention not illustrated, the dual comparison step indicated by 201 in figure 6 is replaced by a comparison step comparing only the information contents INF8aq and INF8ref, relative to the TY8 type marking (QR code) .

According to a variation of the invention not illustrated, the label 7 of each authentic article does not comprise the marking 9 and therefore the APPC application does not comprise the steps indicated by 105 and 106 (figure 5), while steps 111 (figure 5) and 201 (figure 6) are modified to deal only with the information content relative to the TY8 marking type, i.e. the marking type 8.

Although the invention described above refers in particular to a precise embodiment example, it should not be considered limited to said embodiment example, since all variations, modifications or simplifications that would be obvious for a person skilled in the art fall within its scope, for example:
- the mobile electronic device consists of a tablet computer;
- the flash 4 of the mobile electronic device comprises a light source different from the LED but with analogous characteristics in terms of intensity and light spectrum;
- the marking 8 consists of a different cryptogram, for example a barcode, an alphanumeric code or a morse code, or a commercial logo; in the latter case the associated information content is the particular form of the logo; and
- the marking 9 consists of a different cryptogram, for example a QR code, an alphanumeric code or a morse code, or a commercial logo.

## Claims

1. A method to check the authenticity of articles, each provided with at least one optical reading marking, the method comprising:
- providing each authentic article with a first marking (8) belonging to a first type of optical reading marking (TY8) and containing a first reference information content (INF8ref), the first marking (8) being printed by means of an ink comprising a fluorescent pigment, which is able to excite, when it is illuminated, from a given distance (D) and for a given amount of time (T), by a flash (4) of a mobile electronic device (1), and to emit, when it is excited, a light that has a negligible intensity compared to the light emitted by the flash (4), but superior to the normal ambient light, and to maintain the excitation for a given second time period (TE) after having switched off the flash (4);
- for each one of said articles, capturing, by means of a camera (3) of the mobile electronic device (1), at least one first image (IM1) of said at least one optical reading marking while the flash (4) is on and at least one second image (IM2) of said at least one optical reading marking after having switched off the flash (4) and within the second time period (TE) from switch-off of the flash; and
- processing the images captured in order to obtain information (INF8aq) concerning said at least one optical reading marking of the article and to determine the authenticity - or lack thereof - of the article as a function of the information (INF8aq) obtained and of the first reference information content (INF8ref).

2. A method according to claim 1, wherein processing the images captured comprises:
- by means of first processing means (6) that are part of said mobile electronic device (1), checking whether a marking of said first type (TY8) is visible in the first image (IM1) and, if so, signalling (104) that the article is not authentic.

3. A method according to claim 2, wherein said at least one second image (IM2) is captured only if a marking of said first type is not visible in the first image (IM1); processing the images captured comprises:
- by means of said first processing means (6), checking (108) whether a marking of said first type (TY8) is visible in the second image (IM2) and, if so, reading (109) said marking from the second image (IM2) in order to acquire a respective first information content (INF8aq); and
- comparing (201) the first acquired information content (INF8aq) with said first reference information content (INF8ref) so as to determine (203, 202) the authenticity - or lack thereof - of the article.

4. A method according to claim 3 and comprising:
- storing said first reference information content (INF8ref) in memory means (11) of a remote server (10);
- transmitting (111) said first acquired information content (INF8aq) to the remote server (10);
- by means of second processing means (12) that are part of the remote server (10), carrying out the step of comparing (201) the first acquired information content (INF8aq) with the first reference information content (INF8ref); and
- transmitting (204) the result of the comparison to the mobile electronic device (1).

5. A method according to one of the previous claims, wherein said first type of optical reading marking (TY8) consists of QR codes.

6. A method according to any of the previous claims, wherein each authentic article is provided with a second marking (9) belonging to a second type of optical reading marking (TY9) and containing a second reference information content (INF9ref), the second marking (9) being printed by means of an ink that is normally visible when it is illuminated by said flash (4); the authenticity - or lack thereof - of the article being determined as a function of the second reference information content (INF9ref).

7. A method according to claims 2 and 6, wherein processing the images captured comprises:
- if a marking of said first type of marking (TY8) is not visible in the first image (IM1), then, by means of said first processing means (6), checking (105) whether a marking of said second type of marking (TY9) is visible in the first image (IM1) and, if so, reading (106) said marking from the first image (IM1) in order to acquire a respective second information content (INF9aq).

8. A method according to claims 4 and 7, and comprising:
- storing said second reference information content (INF9ref) in said memory means (11) of said remote server (10);
- transmitting, to the remote server (10), said second acquired information content (INF9aq) together with said first acquired information content (INF8aq);
- by means of said second processing means (12), determining (201-203) the authenticity - or lack thereof - of the article as a function of said first and second acquired information contents (INF8aq, INF9aq) and of said first and second reference information contents (INF8ref, INF9ref); and
- transmitting (204) the result of the determination of authenticity to the mobile electronic device (1).

9. A method according to one of the claims from 6 to 8, wherein said second type of optical reading marking (TY9) consists of barcodes.

## Patentansprüche

1. Verfahren zum Überprüfen der Authentizität bzw. Echtheit von Artikeln, die jeweils mit zumindest einer optischen Lesemarkierung versehen sind, wobei das Verfahren umfasst:
- Versehen jedes authentischen Artikels mit einer ersten Markierung (8), die zu einem ersten Typ von optischer Lesemarkierung (TY8) gehört und einen ersten Referenzinformationsinhalt (INF8ref) enthält, wobei die erste Markierung (8) mittels einer Tinte gedruckt wird, die ein fluoreszierendes Pigment umfasst, das in der Lage ist, bei Beleuchtung aus einer bestimmten Entfernung (D) und für eine bestimmte Zeitdauer (T) durch einen Blitz (4) einer mobilen elektronischen Vorrichtung (1) anzuregen und bei Anregung ein Licht zu emittieren, das im Vergleich zu dem von dem Blitz (4) emittierten Licht eine vernachlässigbare Intensität aufweist, die jedoch dem normalen Umgebungslicht überlegen ist, und die Anregung nach dem Ausschalten des Blitzes (4) für eine bestimmte zweite Zeitdauer (TE) aufrechtzuerhalten;
- für jeden der Artikel, Aufnehmen, mittels einer Kamera (3) der mobilen elektronischen Vorrichtung (1), zumindest eines ersten Bildes (IM1) der zumindest einen optischen Lesemarkierung, während der Blitz (4) EIN ist, und zumindest eines zweiten Bildes (IM2) der zumindest einen optischen Lesemarkierung nach dem Ausschalten des Blitzes (4) und innerhalb der zweiten Zeitdauer (TE) nach dem Ausschalten des Blitzes; und
- Verarbeiten der aufgenommenen Bilder, um Informationen (INF8aq) betreffend die zumindest eine optische Lesemarkierung des Artikels zu erhalten und die Authentizität bzw. Echtheit - oder das Fehlen davon - des Artikels in Abhängigkeit von den erhaltenen Informationen (INF8aq) und dem ersten Referenzinformationsinhalt (INF8ref) zu bestimmen.

2. Verfahren nach Anspruch 1, wobei das Verarbeiten der aufgenommenen Bilder umfasst:
- mittels der ersten Verarbeitungsmittel (6), die Teil der mobilen elektronischen Vorrichtung (1) sind, Prüfen, ob eine Markierung des ersten Typs (TY8) in dem ersten Bild (IM1) sichtbar ist, und wenn ja, Signalisieren (104), dass der Artikel nicht authentisch bzw. echt ist.

3. Verfahren nach Anspruch 2, wobei das zumindest eine zweite Bild (IM2) nur aufgenommen wird, wenn eine Markierung des ersten Typs in dem ersten Bild (IM1) nicht sichtbar ist; wobei das Verarbeiten der aufgenommenen Bilder umfasst:
- mittels der ersten Verarbeitungsmittel (6), Prüfen (108), ob eine Markierung des ersten Typs (TY8) in dem zweiten Bild (IM2) sichtbar ist, und wenn ja, Lesen (109) der Markierung aus dem zweiten Bild (IM2), um einen entsprechenden ersten Informationsinhalt (INF8aq) zu erhalten; und
- Vergleichen (201) des ersten erfassten Informationsinhalts (INF8aq) mit dem ersten Referenzinformationsinhalt (INF8ref), um die Authentizität - oder das Fehlen davon - des Artikels zu bestimmen (203, 202).

4. Verfahren nach Anspruch 3 und umfassend:
- Speichern des ersten Referenzinformationsinhalts (INF8ref) in Speichermitteln (11) eines entfernten Servers (10);
- Übertragen (111) des ersten erfassten Informationsinhalts (INF8aq) an den entfernten Server (10);
- mittels zweiter Verarbeitungsmittel (12), die Teil des entfernten Servers (10) sind, Durchführen des Schritts des Vergleichens (201) des ersten erfassten Informationsinhalts (INF8aq) mit dem ersten Referenzinformationsinhalt (INF8ref); und
- Übertragen (204) des Ergebnisses des Vergleichs an die mobile elektronische Vorrichtung (1).

5. Verfahren nach einem der vorhergehenden Ansprüche, wobei der erste Typ von optischer Lesemarkierung (TY8) aus QR-Codes besteht.

6. Verfahren nach einem der vorhergehenden Ansprüche, wobei jeder authentische Artikel mit einer zweiten Markierung (9) versehen wird, die zu einem zweiten Typ von optischer Lesemarkierung (TY9) gehört und einen zweiten Referenzinformationsinhalt (INF9ref) enthält, wobei die zweite Markierung (9) mittels einer Tinte gedruckt wird, die normalerweise sichtbar ist, wenn sie von dem Blitz (4) beleuchtet wird; wobei die Authentizität bzw. Echtheit - oder das Fehlen davon - des Artikels in Abhängigkeit von dem zweiten Referenzinformationsinhalt (INF9ref) bestimmt wird.

7. Verfahren nach den Ansprüchen 2 und 6, wobei das Verarbeiten der aufgenommenen Bilder umfasst:
- wenn eine Markierung des ersten Typs von Markierung (TY8) in dem ersten Bild (IM1) nicht sichtbar ist, Prüfen, (105) mittels der ersten Verarbeitungsmittel (6), ob eine Markierung des zweiten Typs von Markierung (TY9) in dem ersten Bild (IM1) sichtbar ist, und wenn ja, Lesen (106) der Markierung aus dem ersten Bild (IM1), um einen jeweiligen zweiten Informationsinhalt (INF9aq) zu erhalten.

8. Verfahren nach den Ansprüchen 4 und 7, umfassend:
- Speichern des zweiten Referenzinformationsinhalts (INF9ref) in den Speichermitteln (11) des entfernten Servers (10);
- Übertragen des zweiten erfassten Informationsinhalts (INF9aq) zusammen mit dem ersten erfassten Informationsinhalt (INF8aq) an den entfernten Server (10);
- mittels der zweiten Verarbeitungsmittel (12), Bestimmen (201-203) der Authentizität bzw. Echtheit - oder das Fehlen davon - des Artikels in Abhängigkeit von dem ersten und dem zweiten erfassten Informationsinhalt (INF8aq, INF9aq) und dem ersten und dem zweiten Referenzinformationsinhalt (INF8ref, INF9ref); und
- Übertragen (204) des Ergebnisses der Bestimmung der Authentizität bzw. Echtheit an die mobile elektronische Vorrichtung (1).

9. Verfahren nach einem der Ansprüche 6 bis 8, wobei der zweite Typ von optischer Lesemarkierung (TY9) aus Barcodes besteht.

## Revendications

1. Procédé pour vérifier l'authenticité d'articles, chacun étant muni d'au moins un marquage de lecture optique, le procédé comprenant :
- le fait de munir chaque article authentique d'un premier marquage (8) appartenant à un premier type de marquage de lecture optique (TY8) et contenant un premier contenu d'informations de référence (INF8ref), le premier marquage (8) étant imprimé au moyen d'une encre comprenant un pigment fluorescent, qui est apte à être excité, lorsqu'il est éclairé, à partir d'une distance donnée (D) et pendant une quantité de temps donnée (T), par un flash (4) d'un appareil électronique mobile (1), et à émettre, lorsqu'il est excité, une lumière qui possède une intensité négligeable comparativement à la lumière émise par le flash (4), mais supérieure à la lumière ambiante normale, et à maintenir l'excitation pendant une seconde période de temps donnée (TE) après avoir éteint le flash (4) ;
- pour chacun desdits articles, la capture, au moyen d'un appareil de prise de vues (3) du dispositif électronique mobile (1), d'au moins une première image (IM1) dudit au moins un marquage de lecture optique tandis que le flash (4) est allumé et d'au moins une seconde image (IM2) dudit au moins un marquage de lecture optique après avoir éteint le flash (4) et pendant la seconde période de temps (TE) à partir de l'extinction du flash ; et
- le traitement des images capturées afin d'obtenir des informations (INF8aq) concernant ledit au moins un marquage de lecture optique de l'article et de déterminer l'authenticité - ou l'absence de celle-ci - de l'article en fonction des informations (INF8aq) obtenues et du premier contenu d'informations de référence (INF8ref).

2. Procédé selon la revendication 1, dans lequel le traitement des images capturées comprend :
- au moyen de premiers moyens de traitement (6) qui font partie dudit dispositif électronique mobile (1), la vérification qu'un marquage dudit premier type (TY8) est visible dans la première image (IM1) et, si tel est le cas, la signalisation (104) que l'article n'est pas authentique.

3. Procédé selon la revendication 2, dans lequel ladite au moins une seconde image (IM2) est capturée uniquement si un marquage dudit premier type n'est pas visible dans la première image (IM1) ; le traitement des images capturées comprend :
- au moyen desdits premiers moyens de traitement (6), la vérification (108) qu'un marquage dudit premier type (TY8) est visible dans la seconde image (IM2) et, si tel est le cas, la lecture (109) dudit marquage à partir de la seconde image (IM2) afin d'acquérir un premier contenu d'informations (INF8aq) respectif ; et
- la comparaison (201) du premier contenu d'informations acquis (INF8aq) avec ledit premier contenu d'informations de référence (INF8ref) afin de déterminer (203, 202) l'authenticité - ou l'absence de celle-ci - de l'article.

4. Procédé selon la revendication 3 et comprenant :
- le stockage dudit premier contenu d'informations de référence (INF8ref) dans des moyens de mémoire (11) d'un serveur distant (10) ;
- la transmission (111) dudit premier contenu d'informations acquis (INF8aq) au serveur distant (10) ;
- au moyen de seconds moyens de traitement (12) qui font partie du serveur distant (10), la réalisation de l'étape de comparaison (201) du premier contenu d'informations acquis (INF8aq) avec le premier contenu d'informations de référence (INF8ref) ; et
- la transmission (204) du résultat de la comparaison au dispositif électronique mobile (1).

5. Procédé selon l'une des revendications précédentes, dans lequel ledit premier type de marquage de lecture optique (TY8) est constitué de codes QR.

6. Procédé selon l'une quelconque des revendications précédentes, dans lequel chaque article authentique est muni d'un second marquage (9) appartenant à un second type de marquage de lecture optique (TY9) et contenant un second contenu d'informations de référence (INF9ref), le second marquage (9) étant imprimé au moyen d'une encre qui est normalement visible lorsqu'elle est éclairée par ledit flash (4) ; l'authenticité - ou l'absence de celle-ci - de l'article étant déterminée en fonction du second contenu d'information de référence (INF9ref) .

7. Procédé selon les revendications 2 et 6, dans lequel le traitement des images capturées comprend :
- si un marquage dudit premier type de marquage (TY8) n'est pas visible sur la première image (IM1), alors, au moyen desdits premiers moyens de traitement (6), la vérification (105) qu'un marquage dudit second type de marquage (TY9) est visible dans la première image (IM1) et, si tel est le cas, la lecture (106) dudit marquage à partir de la première image (IM1) afin d'acquérir un second contenu d'informations (INF9aq) respectif.

8. Procédé selon les revendications 4 et 7, et comprenant :
- le stockage dudit second contenu d'informations de référence (INF9ref) dans lesdits moyens de mémoire (11) dudit serveur distant (10) ;
- la transmission, au serveur distant (10), dudit second contenu d'informations acquis (INF9aq) conjointement avec ledit premier contenu d'informations acquis (INF8aq) ;
- au moyen desdits seconds moyens de traitement (12), la détermination (201-203) de l'authenticité - ou de l'absence de celle-ci - de l'article en fonction desdits premier et second contenus d'informations acquis (INF8aq, INF9aq) et desdits premier et second contenus d'information de référence (INF8ref, INF9ref) ; et
- la transmission (204) du résultat de la détermination de l'authenticité au dispositif électronique mobile (1).

9. Procédé selon l'une des revendications 6 à 8, dans lequel ledit second type de marquage de lecture optique (TY9) est constitué de codes à barres.
